# NEUE EUROPÄISCHE PATENTSCHRIFT

(11) **EP 1 128 999 B2**
(45) Veröffentlichungstag und Bekanntmachung des Hinweises auf die Entscheidung über den Einspruch: **24.10.2007**
(45) Hinweis auf die Patenterteilung: 11.02.2004
(21) Anmeldenummer: 99972170.7
(22) Anmeldetag: 12.11.1999
(51) Int. Cl.: B60T 7/10, B60T 13/74

(54) **VORRICHTUNG SOWIE VERFAHREN ZUR STEUERUNG EINER ELEKTRISCH BETÄTIGBAREN FESTSTELLBREMSE**
DEVICE AND METHOD FOR CONTROLLING AN ELECTRICALLY ACTUATED PARKING BRAKE
DISPOSITIF ET PROCEDE POUR PILOTER UN FREIN DE STATIONNEMENT A COMMANDE ELECTRIQUE

(30) Priorität: 12.11.1998 DE 19852111
(43) Veröffentlichungstag der Anmeldung: 05.09.2001
(73) Patentinhaber: Continental Teves AG & Co. oHG, 60488 Frankfurt (DE)
(72) Erfinder: BAIER, Robert, D-64807 Dieburg (DE); BERTHOLD, Thomas, D-64293 Darmstadt (DE); ECKERT, Alfred, D-55129 Mainz-Hechtsheim (DE); KELLING, Enno, D-65760 Eschborn (DE); STICHER, Thomas, D-64354 Reinheim (DE)
(86) Internationale Anmeldenummer: PCT/EP1999/008748
(87) Internationale Veröffentlichungsnummer: WO 2000/029268

(56) Entgegenhaltungen:
- DE-A- 19 519 309
- DE-A- 19 832 167
- "Die elektromechanisch betätigte Feststellbremse", Skriptum zu einem Vortrag von Dipl.-Ing. K.F. Wörsdörfer, Aachener Kolloquium Fahrzeug- und Motorentechnik 1998 am 07.10.98
- "Die elektrische Parkbremse als neuartiges Mittel zur Erhöhung des Bedienkomforts in zukünftigen PKW", Skriptum zu einem Vortrag von Dipl.-Ing. A. Eckert, Dr.-Ing. J.Böhm, Dipl.-Ing.J.Balz, Dr.-Ing. P.Rieth, auf der 8. Internationalen Tagung Elektronik im Kraftfahrzeug, Baden-Baden, 08. und 09. 10.1998
- Auszug aus: "ECE Übereinkommen über die Annahme einheitlicher technischer Vorschriften für Radfahrzeuge, Ausrüstungsgegenstände und Teile, die in Radfahrzeuge(n) eingebaut und/oder verwendet werden können, und die Bedingungen für die gegenseitige Anerkennung von Genehmigungen, die nach diesen Vorschriften erteilt wurden; Regelung Nr.13, Seite 42"
- "Sensoren im Kraftfahrzeug", aus Funkschau 26/1982
- Automotive Electronics Handbook, Jansen, McGraw Hill 1995

## Beschreibung

Die Erfindung betrifft eine Vorrichtung sowie ein Verfahren zur Steuerung einer elektrisch betätigbaren Feststellbremsanlage gemäß dem Oberbegriff des Anspruchs 1 bzw. des Anspruchs 6.

Aus der DE 198 38 886 A1 ist beispielsweise eine elektrische Feststellbremsanlage für ein Kraftfahrzeug bekannt, bei der eine Steuervorrichtung zur Ansteuerung einer Radbremse der Feststellbremsanlage vorgesehen ist. Zur Betätigung der Radbremsen weist die Feststellbremsanlage ein Bedienelement auf, das über die zwischengeschaltete Steuervorrichtung auf die Radbremsen einwirkt. Im Falle eines Fehlers innerhalb der elektrischen Feststellbremsanlage (z. B. im Bedienelement oder in der Steuervorrichtung) ist der sichere Betrieb der Feststellbremsanlage nicht mehr gewährleistet.

Die DE 197 51 431 A1 offenbart darüber hinaus eine elektromechanische Feststellbremsanlage mit einer Betätigungseinrichtung, einer elektronischen Steuervorrichtung sowie motorisch betätigbaren Feststellbremsen. Dabei werden in der elektronischen Steuervorrichtung die von der Betätigungseinrichtung gelieferten Eingangssignale in entsprechende Ausgangssignale für die Feststellbremsen umgewandelt. Zur Erhöhung der Funktionssicherheit weist die elektronische Steuervorrichtung zwei oder mehrere parallel arbeitende Steuereinheiten zur getrennten, redundanten Verarbeitung der Eingangssignale auf. Durch diese Maßnahme können jedoch nur Fehler innerhalb der Steuervorrichtung für die Ansteuerung der Feststellbremsen berücksichtigt werden. Ferner ist im Fehlerfall im System keine Fehlerdiagnose und damit eindeutige Erkennung des Fahrerwunsches bei der Betätigung der Feststellbremsanlage möglich.

Darüber hinaus ist aus der DE 195 19 309 A1 eine Bremspedaleinheit für ein Brake-by-wire-System mit zwei an ein Bremspedal angeschlossenen Sensoren, die redundante analoge Signale abgeben, bekannt. Um eine Redundanz für die Bremspedaleinheit zu erreichen, ist ein zusätzlicher Schalter vorgesehen, der die für einen Mehrheitsentscheid im Fehlerfall erforderliche Information zur Verfügung stellt. Als wenig vorteilhaft ist bei diesem System anzusehen, dass im Fehlerfall keine Fehlerdiagnose möglich ist.

Aus dem Fachartikel "Die elektromechanisch betätigte Feststellbremse", der auf dem 7. Aachener Kolloquium Fahrzeug - und Motorentechnik 1998 veröffentlicht wurde, ist eine Vorrichtung zur Steuerung einer elektrisch betätigbaren Feststellbremse gemäß dem Oberbegriff des Anspruchs 1 bekannt.

Aufgabe der Erfindung ist es, eine Feststellbremsanlage der eingangs genannten Art zu schaffen, die selbst im Fehlerfall eine Erkennung des Fahrerwunsches und gleichzeitig eine Fehlerdiagnose ermöglicht.

Gelöst wird die Aufgabe durch eine Vorrichtung zur Steuerung einer elektrisch betätigbaren Feststellbremse mit den Merkmalen des Patentanspruches 1. Danach umfasst die Vorrichtung eine Eingabevorrichtung zur Aufnahme eines Fahrerwunsches betreffend eine Betätigung der Feststellbremse sowie eine Steuervorrichtung zur des Erfassung des Fahrerwunsches ausgehend von Signalen der Eingabevorrichtung und zur Ansteuerung der Feststellbremsen. Dabei empfängt die Steuervorrichtung den Fahrerwunsch repräsentierende Signale der Eingabevorrichtung und wandelt diese in den Betätigungssollwert der Feststellbremsen repräsentierende Ansteuersignale für die Feststellbremsen um. Die Eingabevorrichtung umfaßt elektrische Schaltmittel, z. B. Drehschalter, Taster etc., mit mehreren Schaltstellungen, wobei die Eingabevorrichtung in jeder Schaltstellung zumindest zwei redundante Ausgangssignale emittiert. Die Auswertung dieser redundanten Ausgangssignale gestattet im Fehlerfall Rückschlüsse auf die Art des Fehlers sowie auf den tatsächlich vorliegenden Fahrerwunsch. Durch die elektronische Steuervorrichtung kann das Kraftfahrzeug mittels der Feststellbremse selbst bei einem Fehler in der Eingabevorrichtung jeweils in einen sicheren Fahrzustand überführt werden.

Vorzugsweise ist das elektrische Schaltmittel als ein beidseitig wirksamer Taster bzw. Wipptaster mit den drei Schaltstellungen 'Neutralstellung', 'Lösestellung' und 'Spannstellung' ausgeführt. Dabei ist der Taster mit jeweils zwei redundanten Schaltern für die Lösestellung und die Spannstellung gekoppelt, die parallel arbeiten. Daraus ergibt sich ein fehlerresistenter Aufbau für die Eingabevorrichtung.

Die redundanten Schalter sind in parallel arbeitenden Schaltebenen zusammengefaßt, die jeweils eine eigenständige Energieversorgung sowie Masseverbindung aufweisen. Weitergehend sind parallel arbeitende Anschlußstecker für die Ausgangssignale der Eingabevorrichtung vorgesehen, die über parallel angeordnete Signalleitungen, Energieversorgungsleitungen und Masseleitungen mit den redundanten Schaltern bzw. parallelen Schaltebenen verbunden sind. Die Anschlußstecker der Eingabevorrichtung sind mit einer zentralen, elektronischen Steuervorrichtung zur Ansteuerung der Feststellbremsen am Rad verbunden. Damit wird der Fahrerwunsch hinsichtlich der Feststellbremsbetätigung redundant erfaßt und weiterbearbeitet. Grundsätzlich eröffnet dies die Möglichkeit der Fehlererkennung sowie Fehlerdiagnose innerhalb der Eingabevorrichtung. Daraus resultierend kann auf erkannte Fehler in der Eingabevorrichtung entsprechend reagiert werden und das Fahrzeug mittels der Feststellbremse in einen sicheren Fahrzustand überführt werden.

Ferner wird ein Verfahren zur Steuerung einer elektrisch betätigbaren Feststellbremse vorgeschlagen, unter Verwendung einer gattungsgemäßen Vorrichtung mit oben genannter Eingabevorrichtung. Zusätzlich ist innerhalb der Vorrichtung, vorzugsweise in der elektronischen Steuervorrichtung eine Auswerteeinheit enthalten mit einer Prozedur zur Erkennung elektrischer bzw. sonstiger einfacher Fehler innerhalb der Eingabevorrichtung. Die Erkennung elektrischer Fehler bezieht sich auf elektrische bzw. einfache Fehler in der Eingabevorrichtung, im Kabelbaum der Eingabevorrichtung und in den Anschlußsteckern. Dabei wird jede Signalleitung, elektrische Versorgungsleitung und Masseleitung auf korrekte Funktion überprüft. Dies geschieht über Potentialmessungen an Widerständen, die an geeigneter Stelle in die Eingabevorrichtung, den Kabelbaum oder die elektronische Steuervorrichtung integriert sind und mit den genannten Leitungen in Verbindung stehen. Durch Auswertung der Potentialmessungen erhält man im Fehlerfall einen Rückschluß auf die Art des Fehlers und kann diesem Fehler geeignet begegnen. Auf diese Art und Weise kann ein Fehler z. B. in Form einer Leitungsunterbrechung oder Unterbrechung eines Schalterkontaktes (z. B. wegen Korrosion), eines Kurzschlusses gegen die elektrische Energieversorgung oder die Masse oder eines abgezogenen Steckers erkannt werden. Die eigentliche Auswertung der Potentialmessungen erfolgt innerhalb einer elektronischen Auswerteeinheit, die besonders vorteilhaft in die Steuervorrichtung integriert ist.

Eine Weiterentwicklung des Verfahrens zur Steuerung der Feststellbremse sieht in der Auswerteeinheit eine Prozedur zur Erkennung logischer Fehler in den Schaltersignalen der Eingabevorrichtung vor. Dabei werden als logische Fehler solche Fehler betrachtet, die von der Auswerteeinheit durch den redundanten Schalteraufbau erkennbar sind. Dazu gehören beispielsweise Fehler, wie Festkleben eines Schalterkontaktes oder mechanische Fehler, die dazu führen, daß einzelne Schalter nicht mehr geschaltet werden können. Die Auswerteeinheit ist durch Logikabfragen in der Lage derartige Fehler richtig zu diagnostizieren und entsprechende Konsequenzen für die Steuerung der Feststellbremse abzuleiten.

Gemäß einer vorteilhaften Weiterbildung der Erfindung ist in die Auswerteeinheit eine Prozedur zur Fahrerwunscherkennung integriert, die im Fehlerfall in der Eingabevorrichtung durchlaufen wird. Dabei erlaubt die Prozedur die eindeutige Fahrerwunscherkennung bezüglich der Feststellbremsbetätigung entweder durch Verwertung des redundanten Signales bei einem einfachen elektrischen Fehler oder durch Mehrheitsentscheidung bei einem logischen Fehler. Zur Ausweitung der Fahrerwunscherkennung im Fehlerfalle werden die redundanten Schalter auf einen Signalwechsel hin detektiert. Dies bezieht sich vor allem auf bestimmte Fahrzustände, insbesondere im Stillstand des Kraftfahrzeuges, d. h. Fahrgeschwindigkeit V = 0. Die Überwachung der Schalter auf Signalwechsel ermöglicht dann, selbst bei nicht erkennbarem Fahrerwunsch aufgrund auftretender elektrischer und/oder logischer Fehler in der Eingabevorrichtung, noch eine Überführung des Kraftfahrzeuges in einen sicheren Fahrzustand.

Bei einigen unwahrscheinlichen Fehlerkonstellationen in der Eingabevorrichtung, z. B. beim gleichzeitigen Auftreten mehrerer Einzelfehler, für die keine eindeutige Fahrerwunscherkennung mehr möglich ist, wird das Fahrzeug durch Definition von Vorzugsrichtungen in der Steuervorrichtung mittels der Feststellbremse in einen sicheren Fahrzustand überführt. Im Sinne der Vorzugsrichtung wird im fahrenden Zustand (V ≠ 0) sowie bei einem erkannten Fehler in der Eingabevorrichtung von der Steuervorrichtung als Ansteuersignal für die Feststellbremse ein 'Lösesignal' festgelegt. Im Fahrzeugstillstand (V = 0) wird bei erkanntem Fehler in der Eingabevorrichtung sowie bei einem erkannten Signalwechsel zumindest eines Schalters von der Steuervorrichtung ein Ansteuersignal zum Zuspannen der Bremse erzeugt. Dies trifft insbesondere auch dann zu, wenn im Fahrzeugstillstand zusätzlich die Betriebsbremse aktiviert, also zugespannt ist.

Zum schnellen Erkennen von Fehlerzuständen in der Eingabevorrichtung werden die genannten Prozeduren zur Erkennung elektrischer und logischer Fehler sowie des Fahrerwunsches bezüglich der Feststellbremsbetätigung zyklisch durchlaufen.

Weitere Merkmale und Vorteile der Vorrichtung mit Eingabevorrichtung sowie des Steuerungsverfahrens nach der Erfindung ergeben sich aus der nachfolgenden Beschreibung eines Ausführungsbeispieles unter Bezugnahme auf die Zeichnung. In der Zeichnung zeigt:
- Fig. 1: eine Prinzipdarstellung einer erfindungsgemäßen Eingabevorrichtung;
- Fig. 2: eine Darstellung der Signalauswertung zur Fehlererkennung in der Eingabevorrichtung als Flußablaufdiagramm;
- Fig. 3: eine Darstellung der Prozedur zur Erkennung logischer Fehler als Flußablaufdiagramm und
- Fig. 4: eine Darstellung der Prozedur zur Erkennung des Fahrerwunsches im Fehlerfall als Flußablaufdiagramm.

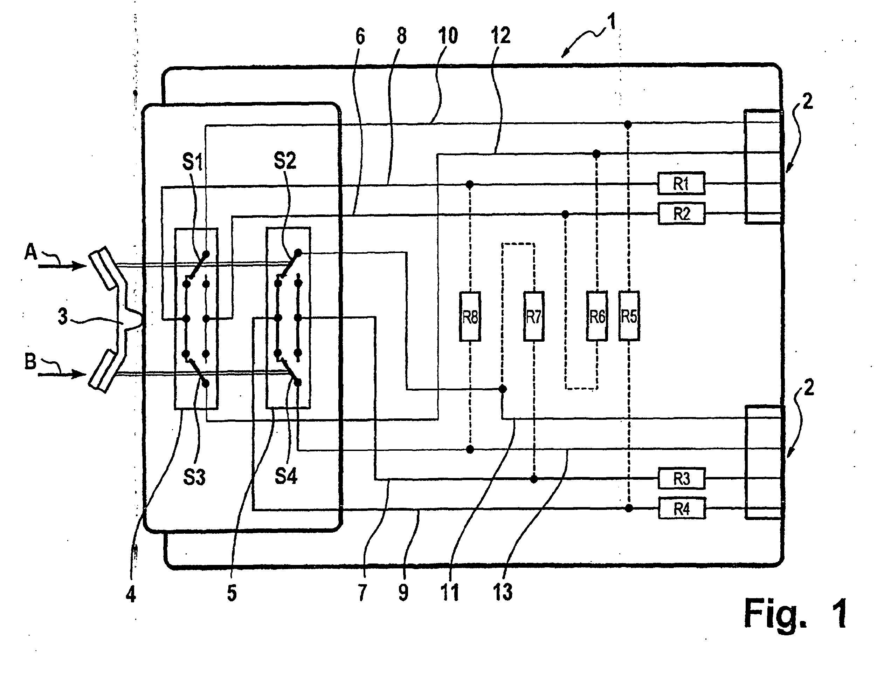

Die in Figur 1 gezeigte Eingabevorrichtung 1 einer Feststellbremsanlage dient der Aufnahme eines Fahrerwunsches bezüglich der Feststellbremsbetätigung, d. h. Zuspannen oder Lösen. Zur Umsetzung eines vorgegebenen Fahrerwunsches steht die Eingabevorrichtung 1 über Anschlußstecker 2 mit einer nicht gezeigten elektronischen Steuervorrichtung (ECU = Electronic Control Unit) in Verbindung, die ihrerseits die von der Eingabevorrichtung 1 gelieferten Signale in entsprechende Ansteuersignale für eine Feststellbremse an einem Kraftfahrzeugrad umwandelt. Über einen elektrisch betätigbaren Aktuator können dann die Feststellbremsen in den gewünschten Betätigungszustand überführt werden.

Als elektrisches Schaltmittel zur Aufnahme des Fahrerwunsches bezüglich der Feststellbremsbetätigung dient ein in zwei Richtungen wirksamer Taster 3 bzw. Wipptaster, der die drei Schaltstellungen 'Neutralstellung', 'Spannstellung' und 'Lösestellung' einnehmen kann. Im unbetätigten Zustand, der in Figur 1 dargestellt ist, befindet sich der Taster 3 in Neutralstellung. Ein Betätigung in Richtung A bewirkt eine Überführung des Tasters 3 in die Spannstellung und eine Betätigung in Richtung B eine Überführung des Tasters 3 in die Lösestellung. Selbstverständlich könnte alternativ zum Taster auch ein anderes elektrisches Schaltmittel Verwendung finden, das ebenfalls mehrere Schaltstellungen einnehmen kann, z. B. ein Drehschalter.

Der Taster 3 ist in beiden Betätigungsrichtungen A, B mit redundanten Schaltern S1, S2, S3, S4 gekoppelt wobei die Schalter S1 und S2 als erste Schaltgruppe in Spannstellung des Tasters 3 gleichzeitig geschaltet werden und die Schalter S3 und S4 als zweite Schaltgruppe in Lösestellung des Tasters gleichzeitig geschaltet werden. Dazu sind die Schalter S1 und S2 sowie S3 und S4 innerhalb von Schaltgruppen jeweils aneinander gekoppelt, beispielsweise mechanisch über einen gemeinsamen Schaltkolben. Die redundanten, d. h. parallel arbeitenden Schalter S1-S4 sind in parallelen Schaltebenen 4, 5 angeordnet, die jeweils mittels einer Versorgungsleitung 6, 7 bzw. einer Masseleitung 8, 9 über eine eigenständige elektrische Versorgung bzw. Masseverbindung verfügen. Durch die beiden Schaltebenen 4, 5 ergibt sich eine redundante Anordnung der Schalter S1, S2 und S3, S4. Zusätzlich sind noch redundant angeordnete Signalleitungen 10-13 in der Eingabevorrichtung 1 vorgesehen, die den jeweiligen Schaltzustand der Schalter S1-S4 wiedergeben. Alle Leitungen führen zu den beiden Anschlußsteckern 2, über die eine Verbindung mit der nicht gezeigten elektronischen Steuervorrichtung besteht.

Alle Leitungen der Eingabevorrichtung 1, d. h. Versorgungsleitungen 6, 7, Masseleitungen 8, 9 und Signalleitungen 10-13 sind mit zumindest einem der Widerstände R1-R8 verbunden. Dabei ist es nicht notwendigerweise erforderlich die Widerstände R1-R8 sämtlich in der Eingabevorrichtung 1 unterzubringen. Gegebenenfalls könne auch einige der Widerstände, z. B. R3, R5, R7 und R8, aus Platzgründen in die elektronische Steuervorrichtung verlegt werden. Durch Potentialmessungen an den Widerständen lassen sich elektrische Fehler in der Eingabevorrichtung 1, wie z. B. Unterbrechung einer Leitung oder eines Schalterkontaktes (z. B. wegen Korrosion), Kurzschluß gegen die Energieversorgung oder die Masse, abgezogener Stecker eindeutig erkennen. Dazu werden die durchgeführten Potentialmessungen in einer Auswerteeinheit der Steuervorrichtung bearbeitet. Bei einem erkannten elektrischen Fehler in der Eingabevorrichtung kann aufgrund des vorliegenden redundanten Signales der Fahrerwunsch noch eindeutig ermittelt werden.

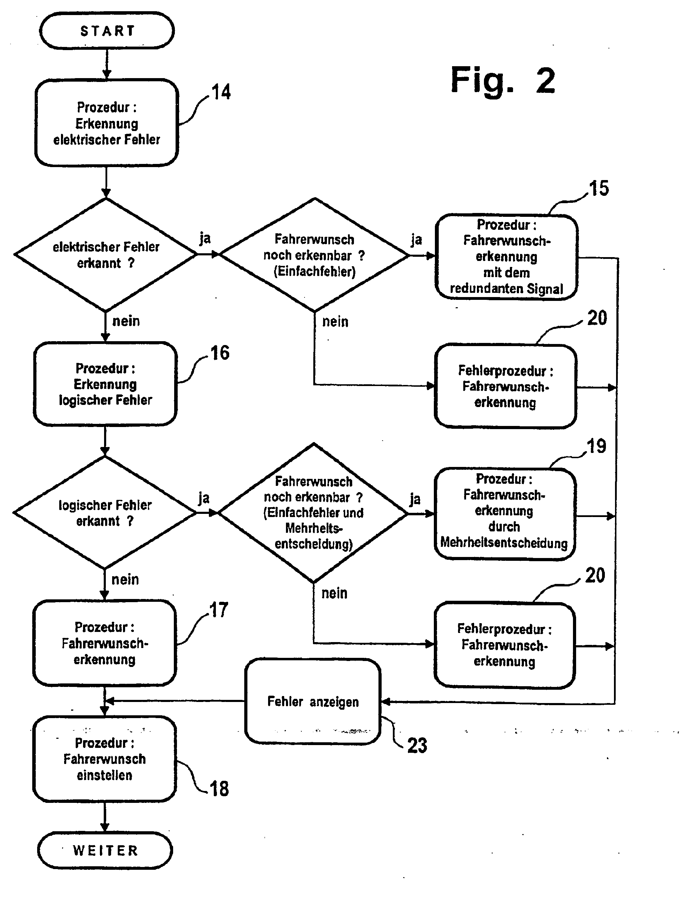

Fig. 2 zeigt ein Flußdiagramm zum prinzipiellen Verfahrensablauf der Signalauswertung zur Erkennung von Fehlern (elektrische oder logische) in der Eingabevorrichtung 1 sowie zur Einstellung des Fahrerwunsches. Dabei wird der in Figur 2 gezeigte Ablauf zyklisch durchlaufen, um eine möglichst frühzeitige Fehlererkennung zu erreichen.

Gestartet wird der Verfahrensablauf durch eine Prozedur 14 zur Erkennung der oben genannten elektrischen Fehler in der Eingabevorrichtung. Dazu erfolgt die Auswertung der Potentialmessungen an den Widerständen R1-R8. Wird ein elektrischer Fehler in der Eingabevorrichtung 1 erkannt, so wird über eine logische Abfrage geprüft ob der Fahrerwunsch hinsichtlich der Feststellbremsbetätigung noch erkennbar ist. Dies ist Fall, wenn lediglich ein einfacher elekrischer Fehler vorliegt und aufgrund des redundanten Aufbaus der Eingabevorrichtung noch ein intaktes, redundantes Schaltersignal vorliegt. Anhanddieses redundanten Schaltersignales läßt mit einer Prozedur 15 zur Fahrerwunscherkennung mit dem redundanten Signal der tatsächlich vorliegende Fahrerwunsch noch eindeutig bestimmen und einstellen.

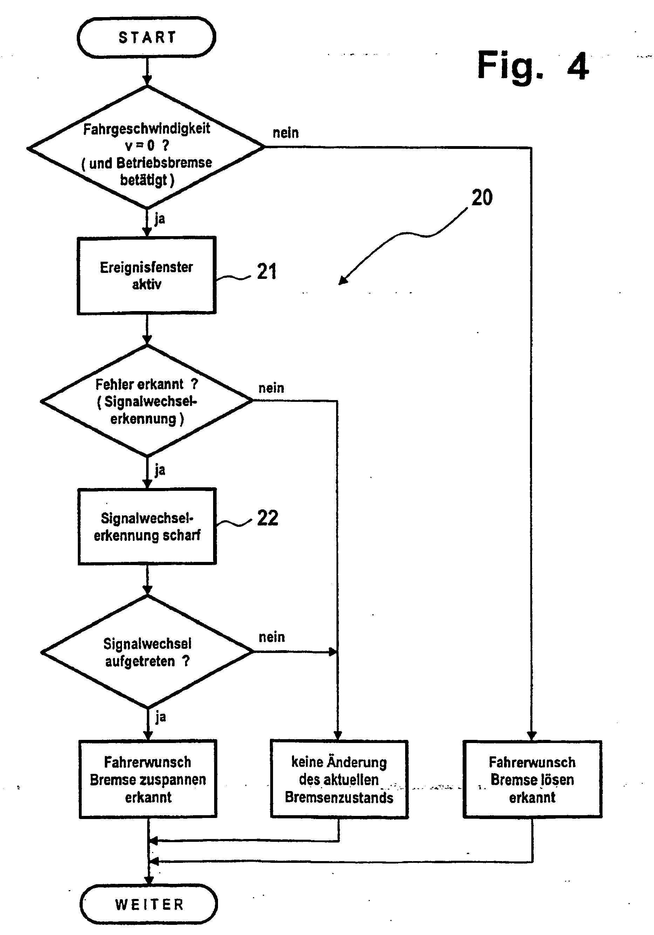

Bei Erkennung eines elektrischen Fehlers, der den Fahrerwunsch nicht mehr eindeutig erkennen läßt, z. B. bei mehreren gleichzeitig vorliegenden elektrischen Einzelfehlern, wird eine Fehlerprozedur 16 zur Fahrerwunscherkennung durchlaufen (siehe Fig. 4). Dabei wird in Abhängigkeit vom Fahrzustand eine bedingte Fahrerwunscherkennung ermöglicht bzw. das Fahrzeug mittels der Feststellbremse in einen sicheren Fahrzustand überführt.

Wird kein elektrischer Fehler in der Eingabevorrichtung 1 ermittelt, so wird die Eingabevorrichtung 1 auf das Vorliegen logischer Fehler in den Signalen der redundanten Schalter S1-S4 überprüft. Als logische Fehler werden dabei derartige Fehler verstanden, die sich aus widersprüchlichen Schaltersignalen ergeben und durch den redundanten Schalteraufbau mit zwei Schalterebenen zu erkennen sind. Dazu gehören beispielsweise Fehler, wie das Festkleben eines Schalterkontaktes oder das Vorliegen sonstiger Fehler, die dazu führen, daß einzelne Schalter nicht mehr geschaltet werden können. Damit wird ein logischer Fehler dann erkannt, wenn innerhalb einer Schaltgruppe (S1, S2 oder S3, S4) nicht die gleichen Signale bzw. die gleichen Betätigungszustände bei beiden Schaltern einer Schaltgruppe auftreten.

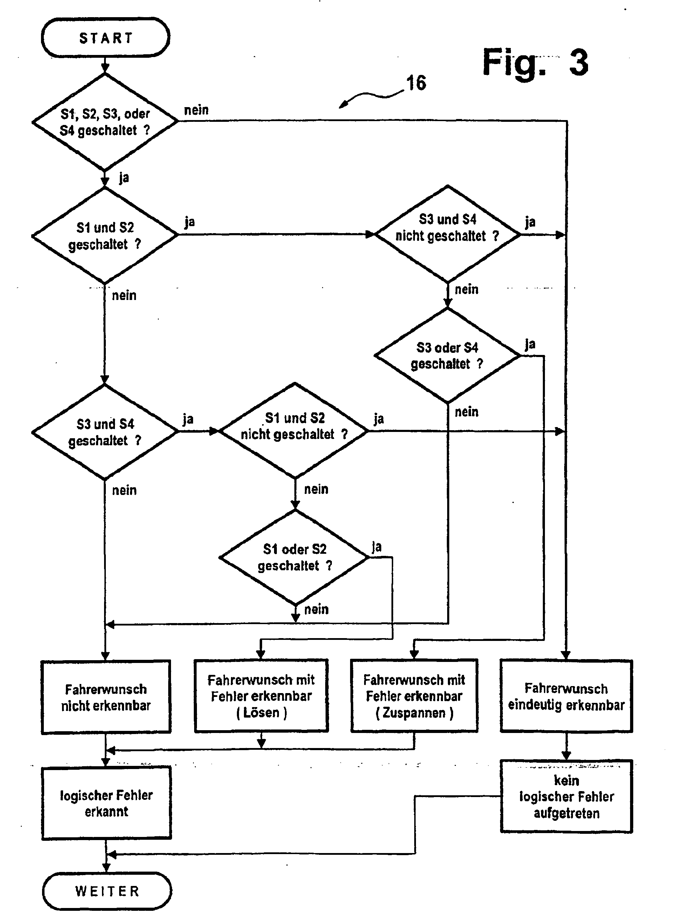

Genauer wird die Prozedur 16 zur Erkennung logischer Fehler in den Schaltersignalen in Figur 3 verdeutlicht. Durch verknüpfte Logikabfragen lassen sich Widersprüche in den Schaltersignalen erkennen. Dabei gilt ein Schalter S1-S4 als nicht geschaltet, wenn er sich in der Ausgangsstellung befindet, die der Neutralstellung des Tasters 3 in Figur 1 entspricht. Ein Schalter ist geschaltet wenn er seinen Kontakt gewechselt hat, etwa bei Betätigung des Tasters 3 in Richtung A Zuspannen (S1 und S2 geschaltet) oder in Richtung B Lösen (S3 und S4 geschaltet). Die unterschiedlichen Fallgestaltungen beim Durchlaufen der Prozedur 16 zur logischen Fehlererkennung sind im einzelnen Fig. 3 zu entnehmen. Ist beispielsweise keiner der Schalter S1-S4 geschaltet, so befindet sich der Taster in Neutralstellung und der Fahrerwunsch ist eindeutig erkennbar. Es liegt kein logischer Fehler vor. Sind die einander entsprechenden Schalter S1 und S2 bzw. S3 und S4 nicht gleichsinnig geschaltet bzw. nicht geschaltet so ist ein logischer Fehler erkannt. Sind dabei zwei zugehörige Schalter (S1 und S2 bzw. S3 und S4) einer Schaltgruppe gleichsinnig geschaltet und nur ein Schalter der anderen Schaltgruppe (S3 oder S4 bzw. S1 oder S2) ist ebenfalls geschaltet, so läßt sich durch Mehrheitsentscheidung der Schaltersignale noch der Fahrerwunsch erkennen und entsprechend einsteuern. Dies wird durch die Prozedur zur Fahrerwunscherkennung durch Mehrheitsentscheidung 19 in Figur 2 geleistet. Ist hingegen nur einer der Schalter S1-S4 geschaltet, wobei die anderen drei nicht geschaltet sind, so ist zwar ein logischer Fehler erkannt, aber der Fahrerwunsch kann nicht mehr abgelesen werden.

Tritt weder ein elektrischer noch ein logischer Fehler in der Eingabevorrichtung auf, so ist eine fehlerfreier Betrieb der Eingabevorrichtung erkannt und der Fahrerwunsch kann aufgrund der Ausgangssignale an den Anschlußsteckern 2 von der Steuervorrichtung umgesetzt werden. Dazu werden vorzugsweise in die Steuervorrichtung integrierte Prozeduren zur Fahrerwunscherkennung bei fehlerfreiem Betrieb 17 und zur Einstellung des Fahrerwunsches 18 durchlaufen. Die Steuervorrichtung erzeugt dann entsprechende Ansteuersignale für die Feststellbremsen.

Ist bei Vorliegen eines elektrischen oder logischen Fehlers keine Fahrerwunschbestimmung in Sinne der oben genannten Prozeduren 15 bzw. 19 möglich, so läßt sich mit Hilfe der Fehlerprozedur zur Fahrerwunscherkennung 20 noch ansatzweise ein Fahrerwunsch ermitteln bzw. das Fahrzeug in einen sicheren Fahrzustand überführen.

Der einzelnen Verfahrensschritte beim Durchlauf der Fehlerprozedur 20 sind Fig. 4 zu entnehmen. Diese Fehlerprozedur 20 wird in Abhängigkeit vom Fahrzustand des Fahrzeuges nur im Fahrzeugstillstand, d. h. für V = 0, durchlaufen. Weiterhin kann zusätzlich noch das Kriterium 'Betriebsbremse aktiviert bzw. zugespannt' als Voraussetzung für das Durchlaufen der Fehlerprozedur herangezogen werden.

Damit wird bei einem erkannten Fehler in der Eingabevorrichtung im fahrenden Fahrzeugzustand, d. h. Fahrgeschwindigkeit V ≠ 0, im Sinne einer definierten Vorzugsrichtung ein Fahrerwunsch 'Feststellbremse lösen' eingestellt. Das Fahrzeug wird damit trotz eines erkannten Fehlers im System in einen sicheren Fahrzustand überführt, da die Betriebsbremse als parallele Bremsanordnung noch voll funktionstüchtig ist.

Innerhalb der Fehlerprozedur wird bei erkanntem Fehler sowie bei einer Fahrgeschwindigkeit V = 0 ein Ereignisfenster 21 aktiviert, das so lange geöffnet bleibt, solange die Aktivierungskriterien erfüllt sind. Wird weiterhin innerhalb des aktivierten Ereignisfensters ein Fehler in der Eingabevorrichtung erkannt, so wird eine bezüglich der redundanten Schalter S1-S4 wirksame Signalwechselerkennung 'scharf' gestellt bzw. aktiviert 22. Dies geschieht besonders vorteilhaft durch Setzen eines "flag" und bedeutet eine Detektierung der Schalter S1-S4 hinsichtlich eines Signalwechsels, d. h. von 'nicht geschaltet' zu 'geschaltet'. Tritt ein solcher Signalwechsel innerhalb des aktivierten Ereignisfensters auf so wird der Fahrerwunsch 'Feststellbremse zuspannen' im Sinne einer definierten Vorzugsrichtung für V = 0 erkannt. Das Fahrzeug wird auch in diesem Falle bei erkanntem Fehler in einen sicheren Fahrzustand überführt.

Wird innerhalb des aktivierten Ereignisfensters 21 kein Betätigungsfehler erkannt bzw. kein Signalwechsel an den Schaltern detektiert, so wird der aktuell vorliegende Zustand der Feststellbremse unverändert beibehalten.

Insgesamt wird durch den beschriebenen Verfahrensablauf trotz eines erkannten Fehlers in der Eingabevorrichtung der Fahrerwunsch bezüglich der Feststellbremsbetätigung umgesetzt oder aber bei nicht ermittelbarem Fahrerwunsch ein sicherer Fahrzustand herbeigeführt.

In jedem Falle wird bei einem erkannten Fehler in der Eingabevorrichtung, d. h. elektrischer oder logischer Fehler, dieser dem Fahrer zur Anzeige gebracht 23, beispielsweise über ein Display oder eine sonstige Anzeigevorrichtung im Fahrgastraum. Damit wird dem Fahrer die Möglichkeit eröffnet den Fehler in der nächsten Werkstatt beheben zu lassen, ohne bis dahin unsichere Fahrzustände befürchten zu müssen.

## Patentansprüche

1. Vorrichtung zur Steuerung einer elektrisch betätigbaren Feststellbremse mit einer Eingabevorrichtung (1) zur Aufnahme eines Fahrerwunsches betreffend eine Betätigung der Feststellbremse, mit einer elektronischen Steuervorrichtung zur Erfassung des Fahrerwunsches über ein entsprechendes Signal der Eingabevorrichtung (1) sowie zur Ansteuerung zumindest einer Feststellbremse, wobei die Eingabevorrichtung (1) ein elektrisches Schaltmittel (3) mit mehreren Schaltstellungen aufweist, das mit redundant ausgeführten Schaltern (S1-S4) gekoppelt ist, welche in parallel arbeitenden Schaltebenen (4, 5) mit eigener Energieversorgung und Masseverbindung angeordnet sind, wobei die Eingabevorrichtung (1) in jeder Schaltstellung zumindest zwei redundante Ausgangssignale emittiert, **dadurch gekennzeichnet, dass** jeder Schaltebene (4, 5) zusätzlich mindestens zwei Signalleitungen (10 - 13) zugeordnet sind.

2. Vorrichtung nach einem der vorhergehenden Ansprüche, **dadurch gekennzeichnet, dass** das elektrische Schaltmittel als Taster (3) mit drei Schaltstellungen ausgeführt ist.

3. Vorrichtung nach einem der vorhergehenden Ansprüche, **dadurch gekennzeichnet, dass** die Eingabevorrichtung (1) zumindest zwei parallel arbeitende Anschlußstecker (2) für die Ausgangssignale der Eingabevorrichtung (1) umfaßt, die mittels parallel arbeitender Signalleitungen (10-13), Energieversorgungsleitungen (6, 7), Masseleitungen (8, 9) mit den redundanten Schaltern (S1-S4) verbunden sind.

4. Vorrichtung nach Anspruch 3, **dadurch gekennzeichnet, dass** die Anschlußstecker (2) mit einer elektronischen Steuervorrichtung elektrisch verbunden sind.

5. Vorrichtung nach Anspruch 3, **dadurch gekennzeichnet, dass** jede Signalleitung (10-13), Versorgungsleitung (6, 7) und Masseleitung (8, 9) der Eingabevorrichtung (1) mit zumindest einem Widerstand (R1-R8) verbunden ist.

6. Verfahren zur Steuerung einer elektrisch betätigbaren Feststellbremse mit einer Vorrichtung nach Anspruch 5, **dadurch gekennzeichnet, dass** die Vorrichtung eine Auswerteeinheit mit einer Prozedur (14) zur Erkennung elektrischer Fehler in der Eingabevorrichtung (1) aufweist, wobei die Prozedur (14) Potentialmessungen an den Widerständen (R1-R8) durchführt.

7. Verfahren zur Steuerung einer elektrisch betätigbaren Feststellbremse nach Anspruch 6, **dadurch gekennzeichnet, dass** die Auswerteeinheit eine Prozedur (16) zur Erkennung logischer Fehler in den Schaltersignalen der Eingabevorrichtung (1) umfaßt.

8. Verfahren zur Steuerung einer elektrisch betätigbaren Feststellbremse nach einem der Ansprüche 6 bis 7, **dadurch gekennzeichnet, dass** die Auswerteeinheit eine Prozedur (15, 19, 20) zur Fahrerwunscherkennung im Fehlerfall innerhalb der Eingabevorrichtung aufweist.

9. Verfahren zur Steuerung einer elektrisch betätigbaren Feststellbremse nach eine der Ansprüche 6 bis 8, **dadurch gekennzeichnet, dass** die Auswerteeinheit im Falle eines Fehlers innerhalb der Eingabevorrichtung (1) die Schalter (S1-S4) auf einen Signalwechsel hin detektiert.

10. Verfahren zur Steuerung einer Feststellbremse nach den Ansprüchen 6 bis 8, **dadurch gekennzeichnet, dass** die Prozeduren (14) zur Erkennung elektrischer Fehler, logischer Fehler (16) und zur Fahrerwunscherkennung im Fehlerfall (15, 19, 20) zyklisch durchlaufen werden.

11. Verfahren zur Steuerung einer elektrisch betätigbaren Feststellbremse nach Anspruch 9, **dadurch gekennzeichnet, dass** im Fahrzeugstillstand, d. h. bei V = 0, bei einem erkannten Fehler in der Eingabevorrichtung (1) sowie bei einem erkannten Signalwechsel zumindest eines Schalters (S1-S4) von der Steuervorrichtung ein Ansteuersignal zum Zuspannen der Feststellbremse erzeugt wird.

12. Verfahren zur Steuerung einer elektrisch betätigbaren Feststellbremse nach Anspruch 11, **dadurch gekennzeichnet, dass** das Ansteuersignal zum Zuspannen der Feststellbremse bei zugespannter Betriebsbremse erzeugt wird.

13. Verfahren zur Steuerung einer elektrisch betätigbaren Feststellbremse nach Anspruch 9, **dadurch gekennzeichnet, dass** bei fahrendem Fahrzeug, d. h. bei V ≠ 0 sowie bei einem erkannten Fehler in der Eingabevorrichtung (1) von der Steuervorrichtung ein Ansteuersignal zum Lösen der Feststellbremse erzeugt wird.

## Claims

1. A device for controlling an electrically operable parking brake with an input device (1) for receiving a driver's request relating to an actuation of the parking brake, with an electronic control device for the acquisition of the driver's request based on a corresponding signal of the input device (1) and for the activation of at least one parking brake, wherein the input device (1) includes an electric switching means (3) with several switch positions, which is coupled to redundantly designed switches (S1 - S4) that are arranged in parallel operating switching levels (4, 5) which have an independent energy supply and connection to ground, and the input device (1) emits at least two redundant output signals in each switch position,
**characterized in that** at least two signal lines (10 to 13) are associated with each switching level (4, 5) in addition.

2. Device as claimed in any one of the preceding claims,
**characterized in that** the electric switching means is configured as a tip switch (3) with three switch positions.

3. Device as claimed in any one of the preceding claims,
**characterized in that** the input device (1) comprises at least two parallel operating attaching plugs (2) for the output signals of the input device (1) which are connected to the redundant switches (S1 - S4) by way of parallel operating signal lines (10-13), energy supply lines (6, 7), and ground wires (8, 9).

4. Device as claimed in claim 3,
**characterized in that** the attaching plugs (2) are electrically connected to an electronic control device.

5. Device as claimed in claim 3,
**characterized in that** each signal line (10 - 13), supply line (6, 7), and ground wire (8, 9) of the input device (1) is connected to at least one resistor (R1 - R8).

6. Method of controlling an electrically operable parking brake with a device as claimed in claim 5,
**characterized in that** the device includes an evaluating unit with a procedure (14) for detecting electric faults in the input device (1), said procedure (14) measuring the potential at the resistors (R1 - R8).

7. Method of controlling an electrically operable parking brake as claimed in claim 6,
**characterized in that** the evaluating unit comprises a procedure (16) for detecting logical errors in the switch signals of the input device (1).

8. Method of controlling an electrically operable parking brake as claimed in any one of claims 6 to 7,
**characterized in that** the evaluating unit includes a procedure (15, 19, 20) for the detection of the driver's request in the case of a fault within the input device.

9. Method of controlling an electrically operable parking brake as claimed in any one of claims 6 to 8,
**characterized in that** the evaluating unit checks the switches (S1 - S4) with respect to a signal change in the case of a fault within the input device (1).

10. Method of controlling a parking brake as claimed in claims 6 to 8,
**characterized in that** the procedures (14) for detecting electric faults, logical errors (16), and for the detection of the driver's request are run through cyclically in the case of an error (15, 19, 20).

11. Method of controlling an electrically operable parking brake as claimed in claim 9,
**characterized in that** during vehicle standstill, i.e., when V = 0, when a fault is detected in the input device (1) and a signal change of at least one switch (S1 - S4) is detected, an actuating signal for application of the parking brake is generated by the control device.

12. Method of controlling an electrically operable parking brake as claimed in claim 11,
**characterized in that** the actuating signal for application of the parking brake is generated when the service brake is applied.

13. Method of controlling an electrically operable parking brake as claimed in claim 9,
**characterized in that** during travel of a vehicle, i.e., when V ≠ 0, and when a fault is detected in the input device (1), an actuating signal for release of the parking brake is generated by the control device.

## Revendications

1. Dispositif pour commander un frein de stationnement pouvant être actionné électriquement, comportant un dispositif d'entrée (1) pour enregistrer un souhait du conducteur relatif à un actionnement du frein de stationnement, un dispositif de commande électronique pour détecter le souhait du conducteur au moyen d'un signal correspondant du dispositif d'entrée (1) ainsi que pour la commande d'au moins un frein de stationnement, le dispositif d'entrée (1) comportant un moyen de commutation électrique (3) avec plusieurs positions de commutation, qui est couplé à des commutateurs (S1-S4) agencés de façon redondante et qui sont disposés dans des plans de commutation (4, 5) fonctionnant en parallèle, avec une alimentation en énergie propre et une liaison de masse propre, le dispositif d'entrée (1) émettant, dans chaque position de commutation, au moins deux signaux de sortie redondants, **caractérisé en ce qu'**en outre au moins deux lignes de transmission de signaux (10 - 13) sont associées à chaque plan de commutation (4, 5).

2. Dispositif selon l'une des revendications précédentes, **caractérisé en ce que** les moyens de commutation électriques sont agencés sous la forme d'une touche (3) comportant trois positions de commutation.

3. Dispositif selon l'une des revendications précédentes, **caractérisé en ce que** le dispositif d'entrée (1) comporte au moins deux connecteurs de raccordement travaillant en parallèle (2) pour des signaux de sortie du dispositif d'entrée (1), qui sont reliés aux commutateurs redondants (S1-S4) à l'aide de lignes de transmission de signaux (10-13), de lignes d'alimentation en énergie (6, 7), de lignes de masse (8, 9) travaillant en parallèle.

4. Dispositif selon la revendication 3, **caractérisé en ce que** les connecteurs de raccordement (2) sont reliés électriquement à un dispositif de commande électronique.

5. Dispositif selon la revendication 3, **caractérisé en ce que** chaque ligne de transmission de signaux (10-13), chacune des lignes d'alimentation (6, 7) et chaque ligne de masse (8, 9) du dispositif d'entrée (1) sont reliées à au moins une résistance (R1-R8).

6. Procédé pour commander un frein de stationnement pouvant être commandé électriquement, comportant un dispositif selon la revendication 5, **caractérisé en ce que** le dispositif comporte une unité d'évaluation mettant en oeuvre un procédure (14) pour identifier des défauts électriques dans le dispositif d'entrée (1), la procédure (14) exécutant des mesures de potentiel au niveau des résistances (R1-R8).

7. Procédé pour commander un frein de stationnement pouvant être actionné électriquement selon la revendication 6, **caractérisé en ce que** l'unité d'évaluation comprend une procédure (16) pour identifier des défauts logiques dans les signaux des commutateurs du dispositif d'entrée (1).

8. Procédé pour commander un frein de stationnement pouvant être actionné électriquement selon l'une des revendications 6 et 7, **caractérisé en ce que** l'unité d'évaluation comprend une procédure (15, 19, 20) pour identifier un souhait du conducteur dans le cas d'un défaut à l'intérieur du dispositif d'entrée.

9. Procédé pour commander un frein de stationnement pouvant être actionné électriquement selon l'une des revendications 6 à 8, **caractérisé en ce que** dans le cas d'un défaut à l'intérieur du dispositif d'entrée (1), l'unité d'évaluation détecte un changement de signal dans les commutateurs (S1-S4).

10. Procédé pour commander un frein de stationnement selon les revendications 6 à 9, **caractérisé en ce que** les procédures (14) pour identifier des défauts électriques, des défauts logiques (16) et pour identifier un souhait du conducteur sont exécutées cycliquement dans le cas d'un défaut (15, 19, 20).

11. Procédé pour commander un frein de stationnement pouvant être actionné électriquement selon la revendication 9, **caractérisé en ce que** lorsque le véhicule est à l'arrêt, c'est-à-dire pour V = 0, dans le cas où un défaut est identifié dans le dispositif d'entrée (1) ainsi que dans le cas où un changement de signal d'au moins un commutateur (S1-S4) est identifié, un signal de commande servant à serrer le frein de stationnement est produit par le dispositif de commande.

12. Procédé pour commander un frein de stationnement pouvant être actionné électriquement selon la revendication 11, **caractérisé en ce que** le signal de commande pour le serrage du frein de stationnement est produit lorsque le frein de service est serré.

13. Procédé pour commander un frein de stationnement pouvant être actionné électriquement selon la revendication 9, **caractérisé en ce que** dans le cas où le véhicule se déplace, c'est-à-dire pour V ≠ 0 ainsi que dans le cas où un défaut est identifié dans le dispositif d'entrée (1), un signal de commande pour desserrer le frein d'actionnement est produit par le dispositif de commande.
